# EUROPEAN PATENT APPLICATION

(11) **EP 4 793 743 A1**
(43) Date of publication of application: **19.08.2026**
(21) Application number: 26157412.3
(22) Date of filing: 10.02.2026
(51) Int. Cl.: G06F 3/0354, G06F 3/038, G06F 3/041

(54) **STYLUS AND METHOD FOR OPERATING THE SAME, AND ELECTRONIC DEVICE**

(30) Priority: 13.02.2025 CN 202510162729; 13.02.2025 CN 202510163219; 13.02.2025 CN 202510159849
(71) Applicant: Shenzhen Qianfenyi Intelligent Technology Co., Ltd, Shenzhen, Guangdong 518000 (CN)
(72) Inventor: HUANG, Yanxin, Shenzhen (CN); CHEN, Liangwu, Shenzhen (CN); ZHAN, Ziyu, Shenzhen (CN)
(74) Representative: Vitina, Maruta

(57) **Abstract**

A stylus includes a pen body, a first electrode, a second electrode and a third electrode. The pen body includes an outer housing and a control assembly disposed therein. The control assembly is configured to control an operating mode of the stylus. The operating mode includes a writing mode and an erasing mode. The first electrode is disposed at a tip end of the pen body, and the second electrode is disposed at a tail end of the pen body. The third electrode is between the first electrode and the second electrode. The third electrode is configured to cooperate with the first electrode or the second electrode to enable detection of a tilt angle of the pen body, or perform an erasing adjustment in the erasing mode. A method for operating the stylus, and an electronic device are also provided.

## Description

### CROSS-REFERENCE TO RELATED APPLICATIONS

This application claims the benefit of priority from Chinese Patent Application Nos. 202510163219.1, 202510159849.1, and 202510162729.7, all filed on February 13, 2025. The content of the aforementioned applications, including any intervening amendments made thereto, is incorporated herein by reference in its entirety.

### TECHNICAL FIELD

This application relates to touch control technologies, and more particularly to a stylus and a method for operating the same, and an electronic device.

### BACKGROUND

At present, interaction systems have been extensively used in various electronic devices. For example, the interaction between a stylus and a touch screen allows a user to operate the stylus to switch between a writing mode and an erasing mode. In the writing mode, the user can write on the touch screen by means of the stylus, and in the erasing mode, the user can use the stylus to erase the written content, such as notes and drawings, on the touch screen. However, for the existing stylus products, it is generally required to adopt a complex structural design to achieve the integration of the writing mode and the erasing mode, resulting in excessive internal components and high manufacturing costs.

### SUMMARY

An object of this application is to provide a stylus, a method of operating the stylus, and an electronic device to enable the convenient and efficient mode switch.

Technical solutions of the present disclosure are described as follows.

In a first aspect, this application provides a stylus, comprising:
a pen body;
a first electrode;
a second electrode; and
a third electrode;
wherein the pen body comprises an outer housing and a control assembly disposed inside the outer housing; and the control assembly is configured to control an operating mode of the stylus, wherein the operating mode comprises a writing mode and an erasing mode;
the first electrode is disposed at a tip end of the pen body, and is configured to transmit a first downlink signal to a touch screen in the writing mode, wherein the first downlink signal is configured to indicate a writing position of the stylus relative to the touch screen;
the second electrode is disposed at a tail end of the pen body, and is configured to transmit a second downlink signal to the touch screen in the erasing mode, wherein the second downlink signal is configured to indicate an erasing position of the stylus relative to the touch screen; and
the third electrode is disposed on the pen body, and is located between the first electrode and the second electrode; and
the third electrode is configured to:
   cooperate with the first electrode to enable detection of a tilt angle of the pen body in the writing mode; and
   cooperate with the second electrode to enable detection of a tilt angle of the pen body in the erasing mode and perform an erasing adjustment.
   In a second aspect, this application provides a method of operating the stylus, the stylus being in communication connection with the touch screen, and the stylus comprising the first electrode at a first end of the stylus, the second electrode at a second end of the stylus, and the third electrode disposed between the first electrode and the second electrode; and
   the method comprising:
      determining a current operating mode of the stylus;
      in response to case that the current operating mode is determined to be the writing mode, controlling the first electrode and the third electrode to respectively transmit the first downlink signal and a third downlink signal to the touch screen to indicate a writing position and a writing tilt state of the stylus relative to the touch screen; and
      in response to case that the current operating mode is determined to be the erasing mode, controlling the second electrode to transmit the second downlink signal to the touch screen to indicate an erasing position of the stylus relative to the touch screen, and controlling the third electrode to transmit a fourth downlink signal to the touch screen to indicate an erasing tilt state of the stylus.

In a third aspect, this application provides an electronic device, comprising a touch screen and the aforementioned stylus.

Compared to the prior art, the present disclosure has the following beneficial effects.

The stylus and the electronic device provided in this application include the first electrode, the second electrode, and the third electrode. Consequently, the stylus can effectively detect the tilt angle of the pen body via the cooperation between the first electrode and the third electrode in the writing mode, and effectively performs adjustment of erasing information via the cooperation between the second electrode and the third electrode in the erasing mode. In this way, the stylus reuses the single third electrode in different operating modes, thereby reducing the number of parts of the stylus and lowering the overall cost of the stylus.

### BRIEF DESCRIPTION OF THE DRAWINGS

In order to illustrate the technical solutions in the embodiments of the present disclosure or in the prior art more clearly, the drawings needed in the description of embodiments or the prior art will be briefly introduced below. Obviously, for those of ordinary skill in the art, other drawings can be obtained based on these drawings without paying creative efforts.
Fig. 1 is a perspective view of an electronic device according to an embodiment of the present disclosure;
Fig. 2 is an exploded view of a stylus according to an embodiment of the present disclosure;
Fig. 3 is an exploded view of the stylus from another angle according to an embodiment of the present disclosure;
Fig. 4 is a partial sectional view of the stylus in a writing mode according to an embodiment of the present disclosure;
Fig. 5 is a partial sectional view of the stylus in an erasing mode according to an embodiment of the present disclosure;
Fig. 6 is an enlarged view of area "A" in Fig. 5;
Fig. 7 is an exploded view showing a cap assembly and an inner housing of the stylus according to an embodiment of the present disclosure;
Fig. 8 is an exploded view showing the cap assembly and the inner housing of the stylus from another angle according to an embodiment of the present disclosure;
Fig. 9 is a schematic diagram of a press component and a locking component according to an embodiment of the present disclosure;
Fig. 10 is a sectional view showing the cap assembly in a first mode control position and a press cap in a first erasing control position according to an embodiment of the present disclosure;
Fig. 11 is a sectional view showing the cap assembly in a second mode control position and the press cap in the first erasing control position according to an embodiment of the present disclosure;
Fig. 12 is a sectional view showing the cap assembly in the first mode control position and the press cap in a second erasing control position according to an embodiment of the present disclosure;
Fig. 13 is a sectional view showing the cap assembly in the second mode control position and the press cap in the second erasing control position according to an embodiment of the present disclosure; and
Fig. 14 is a schematic view illustrating an assembly of the cap assembly and the inner housing according to an embodiment of the present disclosure.

In the drawings: 10, electronic device; 20, touch screen; 2a, writing surface; 30, stylus; 40, pen body; 41, outer housing; 410, flat surface; 42, tip; 43, control assembly; 431, main circuit board; 44, first electrode; 45, strain gauge module; 46, haptic feedback module; 47, battery; 48, wireless charging assembly; 49, inner housing; 491, cylindrical body; 4911, annular sidewall structure; 4912, bottom wall; 4913, positioning groove; 492, support portion; 494, notch; 50. cap assembly; 51. press cap; 511. limiting groove; 52. press component; 521. first cylindrical section; 522. second cylindrical section; 5221. limiting block; 523. step structure; 524. guide groove; 5241. first groove section; 5242, second groove section; 524a, first guide segment; 524b, second guide segment; 524c, first inclined guide surface; 524d, second inclined guide surface; 524m, first straight segment; 524n, second straight segment; 5243, hook segment; 53, driving element; 54, cap housing; 541, cavity; 542, accommodating groove; 543, base portion; 544, extension portion; 55, eraser head; 57, second electrode; 58, locking component; 581, limiting end; 582, fixing end; 583, connecting rod; 61, first magnetic element; 62, second magnetic element; and 63, third electrode.

### DETAILED DESCRIPTION OF EMBODIMENTS

The disclosure will be described in detail below with reference to the accompanying drawings and embodiments to make the technical solutions, objects and advantages of the disclosure clearer. It should be understood that the embodiments described herein are merely intended to explain the disclosure and are not intended to limit the disclosure.

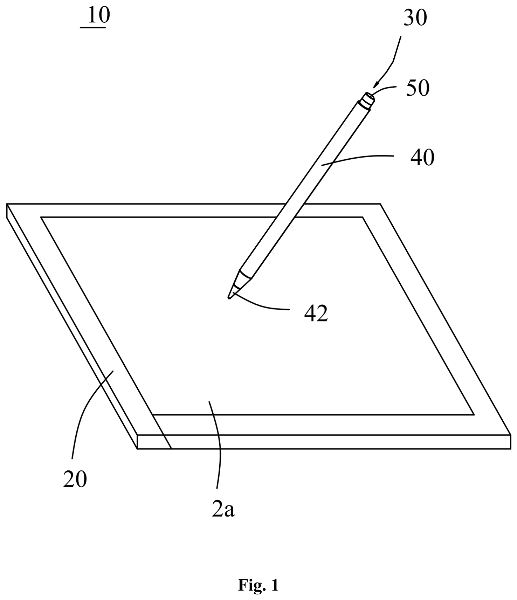

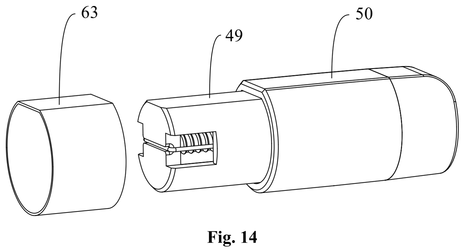

The specific structures of an electronic device and a stylus provided in the embodiments of the present disclosure are described in detail below in conjunction with Figs. 1 to 14.

Referring to Fig. 1, the electronic device 10 in this embodiment includes a touch screen 20 and a stylus 30.

In some embodiments, the touch screen 20 may be the touch screen included in a device such as a mobile phone, a tablet computer, a wearable device (such as a smartwatch or a smart bracelet), an in-vehicle device, an augmented reality (AR)/virtual reality (VR) device, a laptop computer, an ultra-mobile personal computer (UMPC), a netbook, a personal digital assistant (PDA), or any other devices having a touch display function. In the embodiments of the disclosure, a tablet computer is used as an exemplary device. The touch screen 20 is also capable of communicating with the stylus 30, sensing movement of the stylus 30, and displaying a movement trajectory of the stylus 30.

The stylus 30 is an input device configured to operate in conjunction with the touch screen 20. In this embodiment, the stylus 30 is a capacitive stylus. In other embodiments, the stylus may also be a resistive stylus, an electromagnetic induction stylus, or a Bluetooth-enabled stylus.

In this embodiment, the stylus 30 acts directly on the touch screen 20, allowing the touch screen 20 to acquire trajectory information of the stylus 30 through contact therewith.

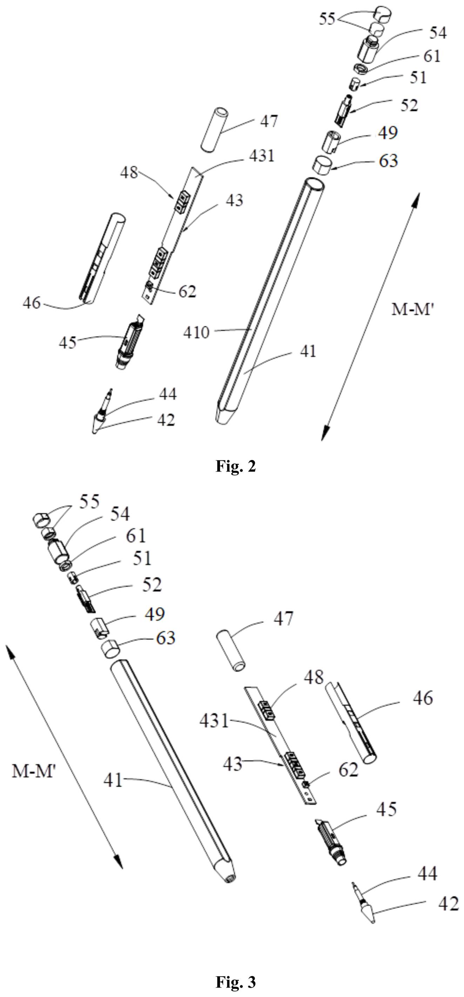

Referring to Fig. 2, the stylus 30 has an elongated pen-shaped structure extending along a preset direction MM'. Specifically, referring to Figs. 1 to 5, the stylus 30 includes a pen body 40, a first electrode 44, a second electrode 57, and a third electrode 63. Specifically, the preset direction MM' is the lengthwise direction of the pen body 40.

The pen body 40 includes an outer housing 41 and a control assembly 43 disposed inside the outer housing 41. The control assembly 43 includes a circuit board and a controller or driver installed on and electrically connected to the circuit board. The control assembly 43 is configured to control an operating mode of the stylus 30. The operating mode includes a writing mode and an erasing mode.

The first electrode 44 is disposed at a tip end of the pen body 40. The first electrode 44 is configured to transmit a first downlink signal to the touch screen 20 in the writing mode, and the first downlink signal is configured to indicate a writing position of the stylus 30 relative to the touch screen 20. Specifically, the first electrode 44 is configured to transmit the first downlink signal to the touch screen 20 in the writing mode, enabling the touch screen 20 to detect the writing position of the stylus 30 on the touch screen 20 and display writing traces. In the interactive system between the stylus 30 and the touch screen 20, a signal direction transmitted from the stylus 30 to the touch screen 20 may generally be defined as a downlink direction, and a signal direction transmitted from the touch screen 20 to the stylus 30 may generally be defined as an uplink direction.

The second electrode 57 is disposed at a tail end of the pen body 40. The second electrode 57 is configured to transmit a second downlink signal to the touch screen 20 in the erasing mode, and the second downlink signal is configured to indicate an erasing position of the stylus 30 relative to the touch screen 20. Specifically, the second electrode 57 is configured to transmit the second downlink signal to the touch screen 20 in the erasing mode, enabling the touch screen 20 to detect the erasing position of the stylus 30 on the touch screen 20 and perform an erasing operation at the erasing position.

The third electrode 63 is disposed on the pen body 40, and is located between the first electrode 44 and the second electrode 57. The third electrode 63 is configured to cooperate with the first electrode 44 to enable detection of a tilt angle θ of the pen body 40 in the writing mode, or/and to cooperate with the second electrode 57 to enable detection of a tilt angle θ of the pen body 40 in the erasing mode and perform an erasing adjustment.

In this embodiment, the stylus 30 further includes a cap assembly 50, a first magnetic element 61, and a second magnetic element 62. The pen body 40 and the cap assembly 50 extend along the preset direction MM' and are movably connected. The first magnetic element 61 and the second magnetic element 62 are disposed at the cap assembly 50 and the pen body 40, respectively.

The pen body 40 further includes a tip 42 disposed at a first end of the outer housing 41. The cap assembly 50 is disposed at a second end of the outer housing 41 opposite the tip 42. The cap assembly 50 is switchable among different positions relative to the pen body 40. The first magnetic element 61 is fixedly disposed at the cap assembly 50, and is switchable among the different positions along with the cap assembly 50.

The second magnetic element 62 is disposed at the pen body 40. One of the first magnetic element 61 and the second magnetic element 62 is electrically connected to the control assembly 43, and is configured to sense a position of the other of the first magnetic element 61 and the second magnetic element 62 and send a position sensing signal to the control assembly 43, such that the control assembly 43 controls the operating mode of the stylus 30 based on the position sensing signal.

In the stylus 30 provided by the above embodiment, the first magnetic element 61 can switch between different positions along with the cap assembly 50. One of the first magnetic element 61 and the second magnetic element 62 is configured to sense the position of the other of the first magnetic element 61 and the second magnetic element 62 and send the position sensing signal to the control assembly 43, thereby enabling the control assembly 43 to control the operating mode of the stylus 30 based on the position sensing signal. The structure and operation of the cap assembly 50 can be designed to be relatively simple and user-friendly. The magnetic induction control approach has advantages of technical maturity, low cost, and high reliability. Consequently, the stylus 30 achieves technical effects such as a relatively simple structure and operation, low cost, and high reliability.

The operating modes include, but are not limited to, the writing mode and the erasing mode. Among these, the writing mode includes a first operating sub-mode and a second operating sub-mode. The first operating sub-mode and the second operating sub-mode include but are not limited to, a note-taking mode, a highlighting mode, a drawing mode.

In some embodiments, one of the first magnetic element 61 and the second magnetic element 62 may be electrically or wirelessly connected to the control assembly 43. In this embodiment, the second magnetic element 62 is disposed at the pen body 40 and is electrically connected to the control assembly 43, and can send the position sensing signal to the control assembly 43. Such a configuration endows the stylus 30 with advantages such as a simple structure, rational design, and low cost.

Specifically, the first magnetic element 61 includes a magnet, and the second magnetic element 62 includes a Hall sensor. The Hall sensor is electrically connected to the control assembly 43. The Hall sensor detects changes in the Gauss value between the Hall sensor and the magnet to control the operating mode. Compared to traditional mechanical keys used for mode triggering, this configuration has a simpler structure, superior tactile feel, and extended service life.

The circuit board includes a main circuit board 431. The driver includes a microcontroller unit (MCU) or a stylus driver chip. The second magnetic element 62 (i.e., the Hall sensor) is directly mounted on the main circuit board 431. This design structure is simple, low-cost, and highly reliable.

The stylus 30 further includes a strain gauge module 45, a haptic feedback module 46, a battery 47, and a wireless charging assembly 48.

In this embodiment, the first electrode 44 is disposed at a tip 42 and is configured to perform touch operations on the touch screen 20. The strain gauge module 45, the haptic feedback module 46, and the battery 47 are all arranged within the outer housing 41. The strain gauge module 45 is located between the first electrode 44 and the haptic feedback module 46 and is configured to sense pressure between the first electrode 44 and the touch screen 20. The haptic feedback module 46 is configured to provide haptic feedback to a user. The battery 47 is electrically connected to the control assembly 43 for supplying power. The battery 47 may be located between the control assembly 43 and the cap assembly 50. The wireless charging assembly 48 is located at one side of the control assembly 43 and may include a plurality of adsorption magnets. The outer housing 41 is provided with a flat surface 410 on an outer surface corresponding to the wireless charging assembly 48, facilitating fixing the pen body 40 while the stylus 30 is wirelessly charged.

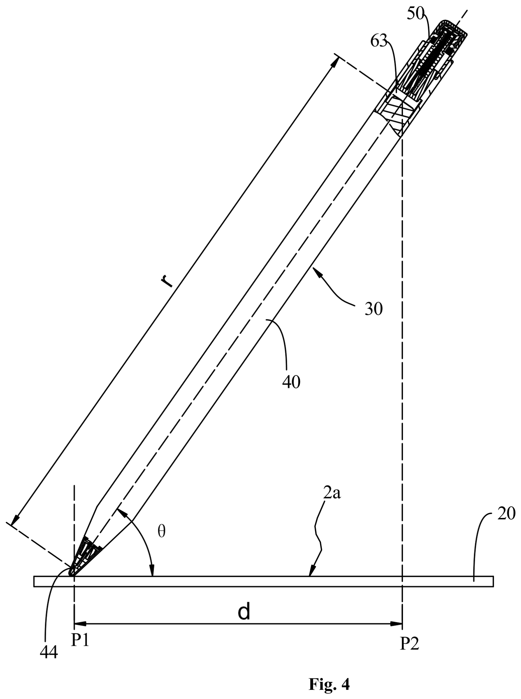

The stylus 30 provided in this embodiment is suitable for the electronic device 10 equipped with the touch screen 20. The stylus 30 can be coupled to the touch screen 20 in various ways. In this embodiment, the stylus 30 can interact with the touch screen 20 of the electronic device 10 through capacitive coupling. For example, the touch screen 20 may include a capacitive sensing array with multiple touch-sensing electrodes. When a user performs writing or erasing operations on the touch screen 20 via the stylus 30, the touch-sensing electrodes of the touch screen 20 that are in contact with or close to the stylus 30 can detect capacitive coupling signals. Thereby, the touch screen 20 can determine the specific position of the stylus 30 or perform corresponding signal interactions. Referring to Figs. 4 to 6, the first electrode 44 is configured to transmit the first downlink signal to the touch screen 20 when the stylus 30 is in the writing mode, enabling the touch screen 20 to detect the writing position of the stylus 30 on the touch screen 20 and display the corresponding writing strokes. It should be noted that when the tip 42 of the pen body 40 touches the writing surface 2a of the touch screen 20, the first electrode 44 couples with the touch screen 20 and generates a first capacitance at the corresponding position on the touch screen 20. The touch screen 20 then determines the position of the stylus 30 on the writing surface 2a based on the position of the first capacitance. This determined position is recognized as the writing position of the stylus 30 on the touch screen 20, and the touch screen 20 can subsequently display the corresponding writing strokes at the writing position.

Specifically, the second electrode 57 is disposed at the cap assembly 50. The second electrode 57 is configured to transmit the second downlink signal to the touch screen 20 in the erasing mode, enabling the touch screen 20 to detect the erasing position of the stylus 30 on the touch screen 20 and perform the erasing operation at that position. It should be noted that when the tail end of the pen body 40 touches or approaches the writing surface 2a of the touch screen 20, the second downlink signal can be detected by the touch-sensing electrodes at the contact position on the touch screen 20 through a capacitive coupling channel formed between the second electrode 57 and the touch-sensing electrodes. The touch screen 20 then determines the specific position of the second electrode 57 of the stylus 30 on the writing surface 2a based on the touch-sensing electrodes that have received the second downlink signal. This specific position is established as the erasing position of the stylus 30 on the touch screen 20, and the touch screen 20 can then execute the erasing operation on the writing strokes at the erasing position.

The third electrode 63 may be disposed on the pen body 40, the cap assembly 50, or between the pen body 40 and the cap assembly 50. In this embodiment, the third electrode 63 is disposed on the pen body 40 and located between the first electrode 44 and the second electrode 57. The third electrode 63 is configured to cooperate with the first electrode 44 to detect the tilt angle θ of the pen body 40 when the stylus 30 is in the writing mode. As an auxiliary electrode of the stylus 30, the third electrode 63 can interact with the touch screen 20 in cooperation with the first electrode 44 and/or the second electrode 57 to provide extended or auxiliary functions. Specifically, the third electrode 63 may be an electrode provided at a predetermined position along the body of the stylus 30, such as an annular electrode located between the first electrode 44 and the second electrode 57. The connection method between the third electrode 63 and the pen body 40 is not limited herein, and can be reasonably designed according to practical requirements. For example, the third electrode 63 may be detachably connected to the pen body 40 by the screwing connection, snap-fit connection, or plug-in connection, but is not limited to these.

When the stylus 30 is in the writing mode or the erasing mode, the third electrode 63 can be driven or controlled by the control assembly 43 inside the pen body 40 to transmit respectively a third downlink signal or a fourth downlink signal to the touch screen 20. The third downlink signal or the fourth downlink signal can serve as a writing auxiliary signal or an erasing auxiliary signal, respectively, allowing the touch screen 20 to detect the specific position of the third electrode 63 relative to the touch screen 20 in the writing mode or erasing mode. Specifically, although the third electrode 63 does not directly contact the touch screen 20, due to the capacitive coupling between the stylus 30 and the touch screen 20, the third or fourth downlink signal transmitted by the third electrode 63 can still be detected by touch-sensing electrodes of the touch screen 20 located beneath the third electrode 63. The touch screen 20 can then determine the specific position of the third electrode 63 of the stylus 30 based on the touch-sensing electrodes that have received the third or fourth downlink signal. By combining the specific position of the third electrode 63 with the detected writing position of the first electrode 44 in the writing mode or the detected erasing position of the second electrode 57 in the erasing mode, the touch screen 20 can further determine the tilt angle information or posture information of the stylus 30 relative to the touch screen 20 in the respective mode, thereby providing extended or auxiliary functions.

In an embodiment, the third electrode 63 is configured to detect the tilt angle θ of the pen body 40 in conjunction with the first electrode 44 when the stylus 30 is in the writing mode. The tilt angle θ can be specifically defined as the angle between the central axis of the stylus 30 and either the plane of the writing surface 2a of the touch screen 20 or the perpendicular plane thereto. The detected tilt angle θ of the pen body 40 can provide various auxiliary or extended functions for the stylus 30 in different scenarios.

Further, the third electrode 63 is also configured to perform erasing information adjustment in conjunction with the second electrode 57 when the stylus 30 is in the erasing mode. When the stylus 30 is in the erasing mode, the erasing information adjustment performed by the third electrode 63 and the second electrode 57 may involve adjustment of the size of an erasing area displayed on the touch screen 20 by the stylus 30 in the erasing mode. Alternatively, the erasing information adjustment may involve adjustment of an erasing transparency displayed on the touch screen 20 by the stylus 30. For example, in the erasing mode, for the same writing stroke, a lower erasing transparency requires more erasing operations of the stylus 30; conversely, a higher erasing transparency requires fewer erasing operations.

The stylus 30 is provided with the first electrode 44, the second electrode 57, and the third electrode 63. Consequently, in the writing mode, the tilt angle θ of the pen body 40 can be effectively detected by the cooperation of the first electrode 44 and the third electrode 63. When the stylus 30 is in the erasing mode, the tilt angle θ of the inverted pen body 40 can be effectively detected by the cooperation of the second electrode 57 and the third electrode 63, thereby effectively adjusting erasing information. In this way, the stylus 30 reuses the single third electrode 63 across both the writing mode and the erasing mode, enabling one third electrode to accomplish two different functions, which can reduce the number of parts in the stylus 30 and lower the cost.

As shown in Fig. 4, the third electrode 63 is configured to transmit the third downlink signal to the touch screen 20 in the writing mode, so that the touch screen 20 can detect the tilt angle θ of the pen body 40 in the writing mode based on the first downlink signal and the third downlink signal. When the control assembly 43 controls the stylus 30 to operate in the writing mode, the first electrode 44, driven or controlled by the control assembly 43, transmits the first downlink signal (or writing signal) to the touch screen 20. Simultaneously, the control assembly 43 can also drive or control the third electrode 63 to transmit the third downlink signal (or writing auxiliary signal) to the touch screen 20. When the tip 42 of the pen body 40 touches the writing surface 2a of the touch screen 20, the first electrode 44 and the third electrode 63 output the first downlink signal and the third downlink signal, respectively, to the touch screen 20 through capacitive coupling channels between the stylus 30 and the touch screen 20. Specifically, the touch-sensing electrodes at the contact position of the first electrode 44 detects the first downlink signal from the first electrode 44, while the touch-sensing electrodes at a position below the third electrode 63 detects the third downlink signal from the third electrode 63. Based on the touch-sensing electrodes that detect the first downlink signal and the third downlink signal, the touch screen 20 can determine a contact position P1 of the first electrode 44 on the touch screen 20 and a coupling position P2 of the third electrode 63 on the touch screen 20, respectively. Furthermore, the tilt angle θ of the pen body 40 relative to the touch screen 20 is calculated based on the contact position P1 of the first electrode 44 and the coupling position P2 of the third electrode 63.

Specifically, as shown in Fig. 4, based on the contact position P1 of the first electrode 44 and the coupling position P2 of the third electrode 40, the touch screen 20 can calculate the relative distance or spacing d between P1 and P2. For the stylus 30, since the relative position between the first electrode 44 and the third electrode 63 within the stylus 30 (i.e., the spacing r between the first electrode 44 and the third electrode 63) is fixed, the tilt angle θ can be obtained by a formula: θ = cos⁻¹ (d/r). It can be understood that the tilt angle θ shown in Fig. 4 is the angle between the central axis of the stylus 30 and the plane of the writing surface 2a of the touch screen 20. The tilt angle θ shown in Fig. 4 is complementary to an angle between the central axis and a plane perpendicular to the writing surface 2a.

In an embodiment, based on the tilt angle θ of the pen body 40 detected by the cooperation of the third electrode 63 and the first electrode 44, auxiliary or extended functions can be provided for the writing interaction between the stylus 30 and the touch screen 20 in the writing mode.

In some embodiments, the tilt angle θ detected by the cooperation of the third electrode 63 and the first electrode 44 can be used to adjust the thickness of the writing stroke displayed by the stylus 30 on the touch screen 20 in the writing mode. For example, the width of the writing stroke when the touch screen 20 detects the tilt angle θ of the pen body 40 being 90 degrees is greater than the width of the writing stroke when the touch screen 20 detects the tilt angle θ of the pen body 40 being less than 90 degrees. When the tilt angle θ of the pen body 40 is 90 degrees, the writing stroke displayed by the stylus 30 on the touch screen 20 in the writing mode has a greater width, enabling highlighting operations. When the tilt angle θ of the pen body 40 is less than 90 degrees, the writing stroke displayed by the stylus 30 on the touchscreen 20 in writing mode has a smaller width, enabling writing or drawing operations. In this way, in the writing mode, users can adjust the tilt angle θ of the pen body 40 to change the thickness of the writing stroke displayed by the stylus 30 on the touch screen 20 according to practical needs, thereby enhancing the usability of the stylus 30.

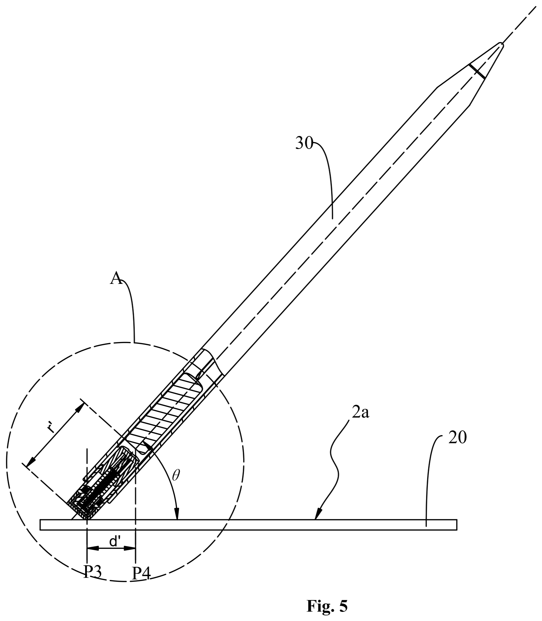

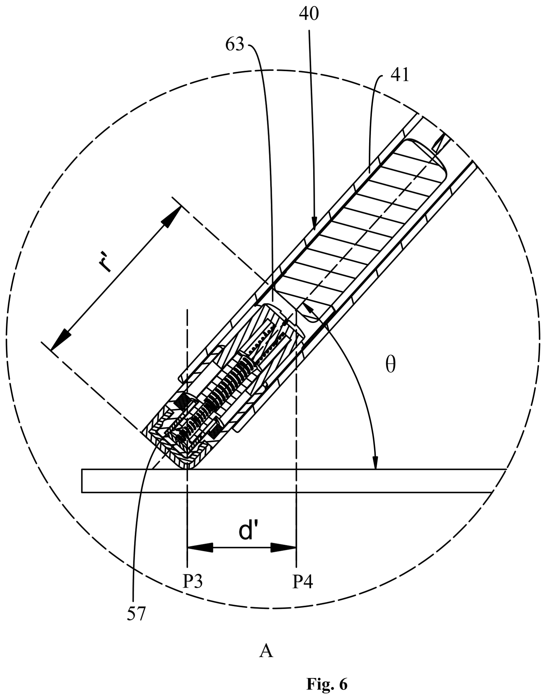

As shown in Figs. 5 and 6, the third electrode 63 is further configured to transmit the fourth downlink signal to the touch screen 20 in the erasing mode, enabling the touch screen 20 to detect the tilt angle θ of the inverted pen body 40 based on the second downlink signal and the fourth downlink signal, and to perform the erasing adjustment based on the tilt angle θ of the inverted pen body 40.

In a scenario where the control assembly 43 controls the stylus 30 to operate in the erasing mode, a user can invert the pen body 40 of the stylus 30 so that the tail end of the stylus 30 touches or approaches the touch screen 20 to activate the erasing mode. At this time, the second electrode 57 near the tail end, driven or controlled by the control assembly 43, transmits the second downlink signal (or an erasing signal) to the touch screen 20. Simultaneously, the control assembly 43 can also drive or control the third electrode 63 to transmit the fourth downlink signal (or an erasing auxiliary signal) to the touch screen 20. When the tail end of the pen body 40 touches or approaches the writing surface 2a of the touch screen 20, the second electrode 57 and the third electrode 63 transmit the second and fourth downlink signals, respectively, to the touch screen 20 via the capacitive coupling channels between the stylus 30 and the touch screen 20. Specifically, the touch-sensing electrodes of the touch screen 20 at the contact position of the tail end detects the second downlink signal transmitted by the second electrode 57, while the touch-sensing electrodes of the touch screen 20 below the third electrode 63 detects the fourth downlink signal transmitted by the third electrode 63. Based on the touch-sensing electrodes that detect the second and fourth downlink signals, the touch screen 20 can respectively determine an erasing position P3 of the second electrode 57 and a coupling position P4 of the third electrode 63 on the touch screen 20 in the erasing mode. Furthermore, the tilt angle θ of the inverted pen body 40 relative to the touch screen 20 in the erasing mode can be further calculated based on the erasing position P3 of the second electrode 57 and the coupling position P4 of the third electrode 63.

As shown in Figs. 5 and 6, the touch screen 20 can calculate the relative distance or spacing d' between P3 and P4 based on the erasing position P3 of the second electrode 57 and the coupling position P4 of the third electrode 63. For the stylus 30, the relative position between the second electrode 57 and the third electrode 63 within the stylus 30 (i.e., their spacing r') are fixed, and the tilt angle θ can be calculated as θ = cos⁻¹ (d'/r'). It can be understood that the tilt angle θ shown in Fig. 5 is the angle between the central axis of the stylus 30 and the plane of the writing surface 2a of the touch screen 20. The tilt angle θ shown in Fig. 5 is complementary to an angle between the central axis and the plane perpendicular to the writing surface 2a.

Specifically, the erasing adjustment includes adjustment of an erasing parameter or erasing information. The erasing parameter is selected from the group consisting of an eraser head size, an eraser head width, an eraser head shape, and an erasing depth. The adjustment of erasing information includes adjustment of the erasing area in the erasing operation. The erasing area detected by the touch screen 20 when the tilt angle θ of the pen body 40 is 90 degrees is larger than the erasing area detected when the tilt angle θ is less than 90 degrees. Furthermore, multiple erasing graphic shapes can be preset on the touch screen 20. For example, the erasing graphic shapes may include, but are not limited to, a circle, triangle, rectangle, hexagon, or octagon. When the tilt angle θ of the pen body 40 is 90 degrees, the erasing area displayed on the touch screen 20 by the stylus 30 in the erasing mode is larger, enabling rapid, large-area erasing of written strokes. When the tilt angle θ of the pen body 40 is less than 90 degrees, the erasing area displayed on the touch screen 20 by the stylus 30 in the erasing mode is smaller, enabling precise and small-area erasing of written strokes. In this way, users can change the size of the erasing area displayed by the stylus 30 on the touch screen 20 in the erasing mode by adjusting the tilt angle θ of the pen body 40 according to their needs, thereby enhancing the usability of the stylus 30.

In some embodiments, when the touch screen 20 detects that the tilt angle θ of the pen body 40 is less than 90 degrees, the erasing area gradually decreases or gradually increases as the tilt angle θ of the pen body 40 decreases. This arrangement enables any tilt angle θ of the pen body 40 between 0 to 90 degrees to display to a corresponding erasing area on the touch screen 20. Compared to designs where a single erasing area corresponds to a specific angle range, this configuration provides higher erasing precision and facilitates user operation.

In some embodiments, the erasing information includes the erasing transparency of the erasing operation. When the touch screen 20 detects that the tilt angle θ of the pen body 40 is less than 90 degrees, the erasing transparency gradually decreases or gradually increases as the tilt angle θ of the pen body 40 decreases. In the erasing mode, for the same writing stroke, a lower erasing transparency requires more erasing operations of the stylus 30; conversely, a higher erasing transparency requires fewer erasing operations. In the erasing mode, users can adjust the tilt angle θ of the pen body 40 according to actual needs to change the erasing transparency displayed on the touch screen 20, thereby enhancing the usability of the stylus 30.

In this embodiment, as shown in Fig. 4, the third electrode 63 is disposed closer to the second electrode 57 relative to the first electrode 44. This arrangement prevents the user from obstructing the third electrode 63 while holding the stylus 30, thereby ensuring the effectiveness of the cooperation between the third electrode 63 and the first electrode 44 of the stylus 30 in the writing mode, as well as the effectiveness of the cooperation between the third electrode 63 and the second electrode 57 of the stylus 30 in the erasing mode. Specifically, the third electrode 63 includes an annular conductive film connected to the outer housing 41. The annular conductive film is disposed around the preset direction MM'. More specifically, the third electrode 63 is located within the outer housing 41 and surrounds the periphery of the cap assembly 50.

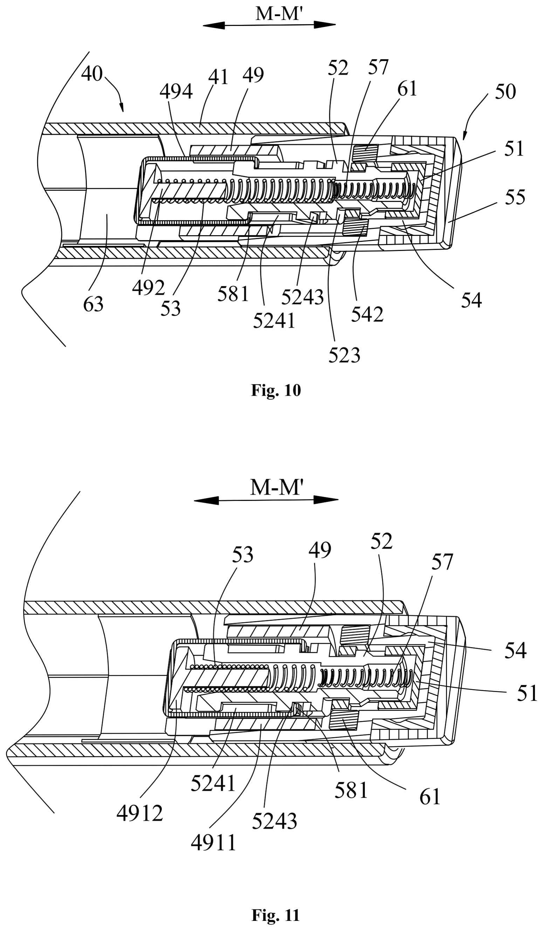

Specifically, as previously described, the cap assembly 50 is movably connected to the pen body 40, such as via a press-type connection. Thus, the cap assembly 50 is pressed along the preset direction MM', thereby driving the first magnetic element 61 to switch between a first mode control position and a second mode control position relative to the pen body 40. This enables the control assembly 43 to control the operation mode of the stylus 30 based on the position sensing signal. As previously described, the operating modes of the stylus 30 includes the writing mode and the erasing mode. Specifically, the writing mode may include the note-taking mode and the highlighting mode. As shown in Figs. 10 to 11, when the cap assembly 50 is at the first mode control position, the stylus 30 operates in one of the note-taking mode and the highlighting mode. When the cap assembly 50 is at the second mode control position, the stylus 30 operates in the other of the note-taking mode and the highlighting mode. It can be understood that in other embodiments, the operating modes are not limited to those described above and may be configured and expanded based on actual requirements.

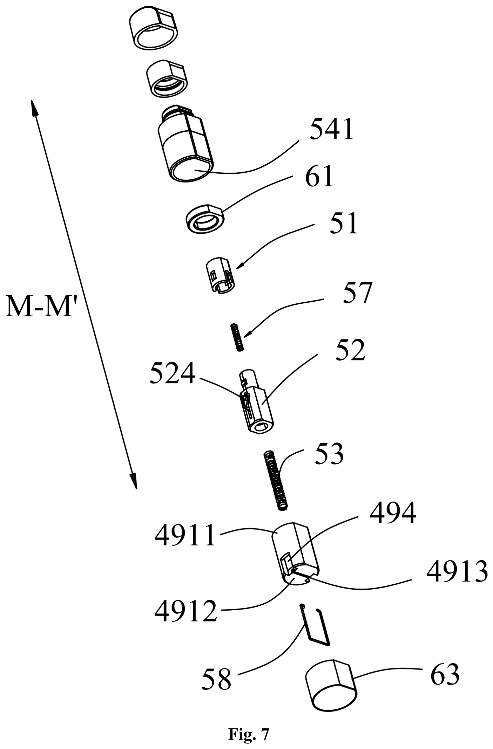

As shown in Figs. 7-14, the pen body 40 further includes an inner housing 49 connected to the outer housing 41. Specifically, the inner housing 49 is fixedly connected to the outer housing 41. The cap assembly 50 includes a press cap 51, a press component 52, and a driving element 53.

The driving element 53 is disposed between the press component 52 and the inner housing 49. The press cap 51 is disposed at an end of the press component 52 away from the driving element 53. The driving element 53 is configured to be compressed by the press component 52 and maintain a compressed state during a process where the cap assembly 50 is switched from the first mode control position (as shown in Fig. 10) to the second mode control position (as shown in Fig. 11) along the preset direction MM'. The driving element 53 is further configured to release elastic force during compression recovery process to drive the press component 52 and the press cap 51 to reset, thereby switching the cap assembly 50 from the second mode control position to the first mode control position. The first magnetic element 61, the second magnetic element 62, and the control assembly 43 are combined to enable the stylus 30 to switch between different operating modes (e.g., the note-taking mode or the highlighting mode). It can be understood that the driving element 53 enables both pressure-activated mode switching and automatic reset functionality, enhancing user experience. The driving element 53 includes a spring, which offers advantages including simple structure, low cost, and high reliability.

The inner housing 49 includes a cylindrical body 491 and a support portion 492. The cylindrical body 491 is fixedly connected to the outer housing 41. At least a part of the support portion 492 is located within the cavity of the cylindrical body 491. The support portion 492 extends along the preset direction MM' and is connected to an inner wall of the cylindrical body 491. The spring of the driving element 53 may be wound around a periphery of the support portion 492. It can be understood that the inner housing 49 is disposed inside the outer housing 41, facilitating assembly and while offering a simple structure and high reliability.

The cap assembly 50 includes the press cap 51 and the press component 52, and further includes a cap housing 54. The cap housing 54 has a cavity 541. An end of the press component 52 extends away from the inner housing 49. At least a portion of the inner housing 49 is located within the cavity 541 of the cap housing 54. The first magnetic element 61 is disposed in the cap housing 54.

Specifically, the cap housing 54 further has an accommodating groove 542 communicating with the cavity 541. The first magnetic element 61 is disposed within the accommodating groove 542, which can secure the first magnetic element 61 via an interference fit. Furthermore, when the cap assembly 50 is actuated by an external force (e.g., pressed by a user), the cap housing 54 drives the first magnetic element 61 to move, thereby improving detection reliability and facilitating assembly.

The first magnetic element 61 has an annular structure but is not limited thereto. The first magnetic element 61 is sleeved around the periphery of the press component 52. Specifically, the cap housing 54, together with the outer housing 41 and/or the inner housing 49, forms a movable structure that is an inner-outer sleeve fit and can be pressed along the preset direction MM'. More specifically, the end of the outer housing 41 away from the tip 42 is sleeved on an end of the cap housing 54, and the end of the cap housing 54 is sleeved on an end of the inner housing 49.

The cap housing 54 includes a base portion 543 sleeved around the periphery of the press component 52 and an extension portion 544 connected to an end of the base portion 543 opposite the press component 52. The extension portion 544 is sleeved around the periphery of the press cap 51. The base portion 543 is sleeved around the periphery of the press component 52. The first magnetic element 61 is located within the cavity of the base portion 543.

The cap assembly 50 further includes an eraser head 55, which can be fitted over the extension portion 544. The eraser head 55 is detachably connected to the end of the cap housing 54 away from the inner housing 49. Preferably, the eraser head 55 is made of plastic material. The plastic material has relatively low hardness, ensuring the eraser head 55 does not scratch the writing surface 2a of the touch screen 20 when sliding across the touch screen 20. The eraser head 55 can be detachably connected to the cap housing 54 by at least one of, but not limited to, screw connection, snap-fit connection, or plug-in connection. The detachable connection between the eraser head 55 and the cap housing 54 facilitates effective replacement of the damaged eraser head 55 in the future. The eraser head may include two coaxially nested cap bodies, but is not limited to the aforementioned structure.

Referring to Fig. 10, when the cap assembly 50 is in the first mode control position (i.e., when the cap assembly 50 is not pressed), the second magnetic element 62 senses the position of the first magnetic element 61. The control assembly 43 can then control the stylus 30 to operate in the first operating mode (e.g., the note-taking mode) based on the position sensing signal. Referring to Fig. 11, when the cap assembly 50 is pressed and in the second mode control position, the second magnetic element 62 senses the position of the first magnetic element 61. The control assembly 43 can then control the stylus 30 to operate in the second operating mode (e.g., the highlighting mode) based on the position sensing signal.

Furthermore, as shown in Figs. 7-9, the cap assembly 50 further includes a locking component 58. The locking component 58 is configured to limit the movement of the press component 52 when the cap assembly 50 is in either the first mode control position or the second mode control position, thereby maintaining the cap assembly 50 in the second mode control position or the first mode control position. In other words, the locking component 58 enables the first operating mode and the second operating mode to be maintained, facilitating user operation.

As shown in Figs. 10-13, the different positions of the press cap 51 and the first magnetic element 61 relative to the pen body 40 include a first erasing control position and a second erasing control position. The cap housing 54 is further configured to, under an external force, drive the press cap 51 and the first magnetic element 61 to switch from the first erasing control position to the second erasing control position relative to the press component 52 and the pen body 40 (e.g., switching from Fig. 10 to Fig. 12, or from Fig. 11 to Fig. 13), thereby controlling the activation and deactivation of the erasing mode.

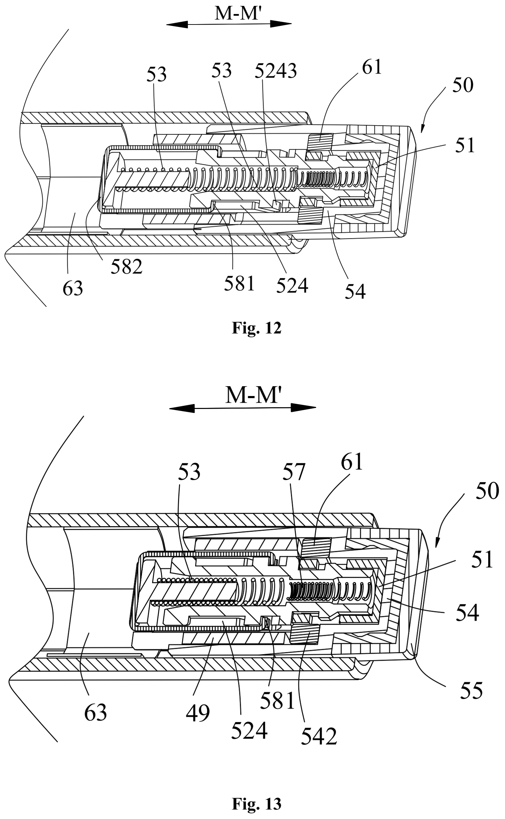

Specifically, in the second erasing control position, the erasing mode can be in an on state. That is, regardless of whether the stylus 30 is in the first operating mode in Fig. 10 or the second operating mode in Fig. 11, when external force is applied to the cap housing 54 through the eraser head 55 (e.g., when a user presses the cap assembly 50 against the touch screen 20), the cap housing 54 receives a pressing force from the touch screen 20. This causes the first magnetic element 61 to move along the preset direction MM' toward a side of the pen body 40 (i.e., toward the second magnetic element 62). Subsequently, the second magnetic element 62 senses the position of the first magnetic element 61 and transmits the position sensing signal. Based on the position sensing signal, the control assembly 43 control the erasing mode to be in the on state (as shown in Figs. 12 and 13), causing the second electrode 57 to operate and cooperate with the touch screen 20 to perform corresponding erasing operations. When the external force on the cap assembly 50 is removed (e.g., when the cap assembly 50 stops pressing against the touch screen 20), the first magnetic element 61 returns to the first erasing control position, thereby terminating the erasing mode. This demonstrates that the control of the erasing mode is very simple and convenient, providing a high-quality user experience. Furthermore, in either the note-taking mode or the highlighting mode, applying an external force to the cap housing 54 (e.g., pressing the cap assembly 50 against the touch screen 20) can cause the first magnetic element 61 to move and trigger the erasing mode, which simulates the effect of using a pencil and enhances the user experience.

In this embodiment, the second electrode 57 is an elastic member. For simplicity, the elastic member hereinafter refers to the second electrode 57. The elastic member is disposed at the cap assembly 50. The press cap 51 is disposed at the end of the press component 52, and the elastic member is located between the press cap 51 and the press component 52. The press cap 51 and the first magnetic element 61 are configured to switch between the first erasing control position and the second erasing control position relative to the press component 52 and the pen body 40. As shown in Figs. 12 and 13, when the press cap 51 is in the second erasing control position, the erasing mode of the stylus 30 is in the ON state. As shown in Figs. 10 and 11, when the press cap 51 is in the first erasing control position, the erasing mode of the stylus 30 is in the OFF state. The elastic member is configured to be compressed by the press cap 51 during the switching of the press cap 51 from the first erasing control position to the second erasing control position. The elastic member is further configured to release elastic force during recovery from compression to drive the press cap 51 to switch from the second erasing control position back to the first erasing control position.

It can be understood that by providing the elastic member, when the external force is removed, the cap housing 54 and the first magnetic element 61 can be driven to reset, thereby stopping the erasing mode. This more vividly simulates the usage effect of a pencil, enhancing the user experience. The elastic member may be a micro-travel spring, which not only has a low cost but also allows its elastic properties to be set according to actual needs, achieving a desirable erasing force and effect.

Furthermore, the elastic modulus of the elastic member can be set to a low value. The user only needs to apply a relatively small force (e.g., gently pressing the cap assembly 50 against the touch screen 20) to cause the press cap 51 and the first magnetic element 61 to switch between the first erasing control position and the second erasing control position. In this case, only the elastic member is compressed, while the driving element 53 is not compressed. This means that such gentle pressing does not trigger the switch between the first operating mode and the second operating mode (e.g., between the note-taking mode and the highlighting mode), but only activates the erasing mode. When the aforementioned relatively small force is removed (e.g., when stopping gently pressing the cap assembly 50 against the touch screen 20), the elastic member recovers its elastic deformation, thereby deactivating the erasing mode.

In contrast, the elastic modulus of the driving element 53 can be set to a higher value. The user needs to apply a relatively large force (e.g., pressing the cap assembly 50 with considerable force) to switch the cap assembly 50 between the first mode control position and the second mode control position. During the switching of the cap assembly 50 between the first and second mode control positions, both the elastic member and the driving element 53 are compressed. When the external force is removed, the elastic member recovers its elastic deformation, while the driving element 53 remains in its compressed state.

By designing the elastic modulus of the elastic member to be lower than that of the driving element 53, the cooperation between the elastic member and the driving element 53 ensures that the erasing mode of the stylus 30 remains in the on state whether the stylus 30 is in either the note-taking mode or the highlighting mode. Therefore, during operation of the stylus 30, the user does not need to frequently manipulate the stylus 30 to switch between the note-taking mode and the erasing mode, or between the highlighting mode and the erasing mode. This provides fast response and can effectively enhance the usability of the stylus 30.

In some embodiments, the elastic member is made of conductive material and possesses electrical conductivity. The elastic member is configured to also function as the second electrode 57 and transmit the second downlink signal to the touch screen 20 in the erasing mode, enabling the touch screen 20 to detect the erasing position of the stylus 30 on the touch screen 20 in the erasing mode and to perform the erasing operation at that position. It can be understood that by reusing the second electrode 57 to initiate and terminate the erasing mode, a single component can perform two functions of initiating the erasing mode and executing the erasing action. This not only reduces the number of parts used, lowers costs, but also achieves the technical effects of a compact and miniaturized structure.

Specifically, the press component 52 includes a first cylindrical section 521 and a second cylindrical section 522 connected to an end of the first cylindrical section 521 away from the inner housing 49. The outer diameter of the first cylindrical section 521 is greater than the outer diameter of the second cylindrical section 522, thereby forming a step structure 523. The press cap 51 is sleeved on the second cylindrical section 522. The elastic member is connected between the press cap 51 and the driving element 53 or between the press cap 51 and the press component 52. During the switching process of the cap assembly 50 from the first erasing control position to the second erasing control position, the press cap 51 abuts against a step surface of the step structure 523. It can be understood that the step structure 523 can control the stroke length for initiating and terminating the erasing mode, enhancing the user experience.

Furthermore, the sidewall of the press cap 51 is provided with a limiting block or a limiting groove (e.g., limiting groove 511), and the sidewall of the second cylindrical section 522 is provided with the other of the limiting block and the limiting groove (e.g., limiting block 5221). The limiting groove 511 extends along the preset direction MM', and the limiting block 5221 is located within the limiting groove 511. When the press cap 51 is switched between the first mode control position and the second mode control position, the limiting block 5221 is slidable within the limiting groove 511. It can be understood that the arrangement of the limiting block 5221 and the limiting groove 511 can guide the movement of the press cap 51 along the preset direction MM', enhancing the smoothness and reliability of the pressing operation.

As mentioned previously, the cap assembly 50 includes the locking component 58. The locking component 58 is configured to limit the press component 52 in response to a case that the cap assembly 50 is in the first mode control position or the second mode control position, thereby maintaining the cap assembly 50 in the first mode control position or the second mode control position.

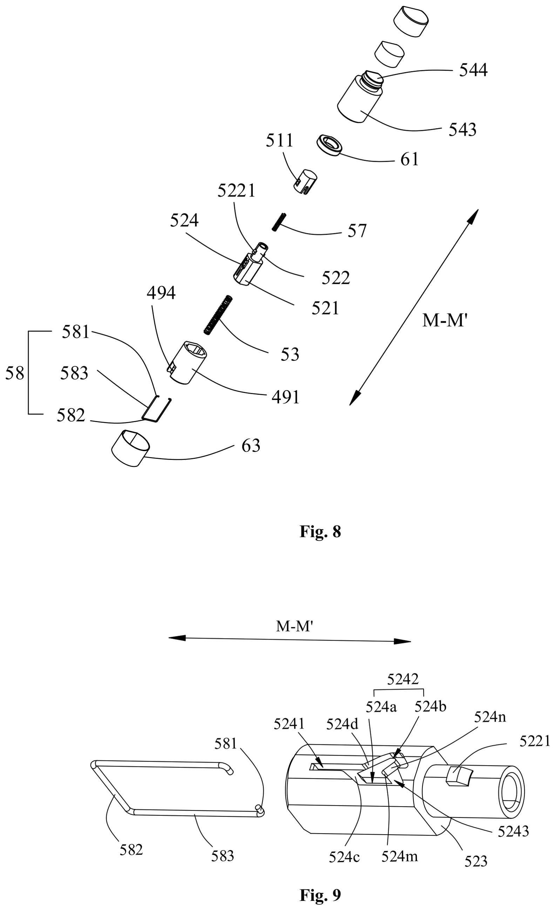

Specifically, the locking component 58 is connected to the inner housing 49 and cooperates with the press component 52 to achieve the function of maintaining the cap assembly 50 in the first mode control position or the second mode control position. The following primarily explains the structure and operating principle of the locking component 58, the press component 52, and the inner housing 49 with reference to Figs. 9 to 11.

In this embodiment, the press component 52 is provided with a guide groove 524. The guide groove 524 includes a first groove section 5241 and a second groove section 5242 in communication with the first groove section 5241. The first groove section 5241 is configured to extend along the preset direction MM'. The second groove section 5242 is in communication with the end of the first groove section 5241 away from the inner housing 49. The second groove section 5242 is provided with a hook segment 5243.

The locking component 58 has a limiting end 581 and a fixing end 582. The limiting end 581 is located within the guide groove 524. When the cap assembly 50 switches between the first mode control position and the second mode control position, the limiting end 581 slides within the guide groove 524. When the cap assembly 50 is in the first mode control position, the fixing end 582 is fixedly connected to the inner housing 49, thereby maintaining the cap assembly 50 in the first mode control position. When the cap assembly 50 is in the second mode control position, the limiting end 581 is latched with the hook segment 5243, thereby maintaining the cap assembly 50 in the second mode control position.

It can be understood that the locking component 58 and the guide groove 524 are provided to achieve the switching and maintaining between the first mode control position and the second mode control position, which has the advantages of lower cost, simpler structure, and higher reliability.

In this embodiment, the second groove section 5242 further includes a first guide segment 524a and a second guide segment 524b. The first guide segment 524a and the second guide segment 524b are respectively connected between the first groove section 5241 and the hook segment 5243, such that the second groove section 5242 forms a closed, irregular annular groove. Specifically, the closed, irregular annular groove is roughly "heart-shaped". When the cap assembly 50 moves from the first mode control position to the second mode control position, the limiting end 581 moves from the first groove section 5241 along the first guide segment 524a to the hook segment 5243. When the cap assembly 50 moves from the second mode control position to the first mode control position, the limiting end 581 disengages from the hook segment 5243 and moves along the second guide segment 524b to the first groove section 5241.

It can be understood that by providing the first guide segment 524a and the second guide segment 524b, the switching path for the limiting end 581 when switching from the first mode control position to the second mode control position is separated from the switching path when switching back from the second mode control position to the first mode control position. This separation not only ensures the effective execution of two switching modes but also avoids issues such as increased wear and reduced service life that would result from a single path.

An outer side surface of the first guide segment 524a, facing away from the second guide segment 524b, includes a first inclined guide surface 524c. An inner side surface of the second guide segment 524b, facing the first guide segment 524a, includes a second inclined guide surface 524d.

The second inclined guide surface 524d is oriented toward the first groove section 5241, thereby guiding the limiting end 581 into the second guide segment 524b. The hook segment 5243 includes an inner hook surface and an outer hook surface, both of which are V-shaped. The inner hook surface of the hook segment 5243 is configured to engage with the limiting end 581 for secure locking. It can be understood that the configuration of the first inclined guide surface 524c and the second inclined guide surface 524d facilitates controlling different switching modes to follow their corresponding switching paths, further ensuring the effective execution of the switching modes, while also reducing wear and extending service life.

Specifically, the hook segment 5243 includes a first straight segment 524m and a second straight segment 524n. The first straight segment 524m is connected to the first guide segment 524a, and the second straight segment 524n is connected to the second guide segment 524b. The first straight segment 524m and the second straight segment 524n are connected to form a V-shape. Furthermore, the length of the first straight segment 524m is less than that of the second straight segment 524n. The inclination angle of the first straight segment 524m relative to the preset direction is smaller than the inclination angle of the second straight segment 524n relative to the preset direction. This configuration enables the movement of the limiting end 581 can be effectively guided during the switching process, thereby enhancing the smoothness of the pressing and switching operation.

In this embodiment, the locking component 58 further includes a connecting rod 583. The connecting rod 583 is connected between the limiting end 581 and the fixing end 582. The cylindrical body 491 of the inner housing 49 has an annular sidewall structure 4911 and a bottom wall 4912 connected to an end of the annular sidewall structure 4911. A first end of the driving element 53 is located within a space enclosed by the annular sidewall structure 4911 and the bottom wall 4912, and is configured to abut against the bottom wall 4912. A second end of the driving element 53 is configured to abut against the press component 52. The fixing end 582 is located on the side of the bottom wall 4912 opposite the driving element 53. The inner housing 49 is provided with a notch 494. The connecting rod 583 is configured to extend out of the notch 494 to connect to the fixing end 582. In response to case that the cap assembly 50 is in the first mode control position, the fixing end 582 is configured to abut against the surface of the bottom wall 4912 away from the driving element 53, thereby maintaining the cap assembly 50 in the first mode control position.

In an embodiment, two connecting rods 583, two limiting ends 581, two notches 494, and two guide grooves 524 are provided. The two guide grooves 524 are respectively located on opposite sides of the press component 52. The two limiting ends 581 are respectively connected to the two guide grooves 524. The two connecting rods 583 are respectively connected to the two limiting ends 581 and extend out through the two notches 494. The fixing end 582 is connected to the ends of the two connecting rods 583 away from the limiting ends 581, such that the fixing end 582 and the two connecting rods 583 collectively form a U-shaped structure. The bottom wall 4912 is located within the U-shaped structure. The surface of the bottom wall 4912 close to the fixing end 582 has a positioning groove 4913. When the cap assembly 50 is in the first mode control position, the fixing end 582 can be received within the positioning groove 4913, thereby locking the first mode control position. It can be understood that the configuration of the locking component 58 and the inner housing 49 described above has advantages such as simple and compact structure, high reliability, and low cost.

In summary, the electronic device 10 and the stylus 30 provided in the embodiments from Figs. 1 to 14 incorporate two magnetic elements 61, 62 capable of relative position change and a movable member (e.g., the press cap 51). This configuration enables one magnetic element to sense the position change of the other magnetic element and output a corresponding position sensing signal. Furthermore, the control assembly 43 controls the operating mode of the stylus 30 based on the position sensing signal. The structure and operation of the movable member are relatively simple. The magnetic sensing control method also offers the advantages of mature technology, low cost, and high reliability. Consequently, the electronic device 10 and the stylus 30 achieve technical effects such as relatively simple structure and operation, low cost, and high reliability.

It should be noted that identical or similar reference signs indicate identical or similar items in the drawings. As used herein, it should be noted that the orientation or positional relationship indicated by the terms "up", "down", "left", and "right" is based on the orientation or positional relationship shown in the accompanying drawings which is only for the convenience of describing the technical solutions and simplifying the description, rather than indicating or implying that the indicated device or element must have a specific orientation, be constructed or operated in a specific orientation. Therefore, these terms are used for illustrative purposes only and should not be understood as a limitation of the present disclosure. Those of ordinary skill in the art can understand the specific meanings of the above terms based on the actual circumstances.

Described above are merely preferred embodiments of the disclosure, which are not intended to limit the disclosure. It should be understood that any modifications and replacements made by those of ordinary skill in the art without departing from the spirit of the disclosure should fall within the scope of the disclosure defined by the present claims.

## Claims

1. A stylus (30), comprising:
a pen body (40);
a first electrode (44);
a second electrode (57); and
a third electrode (63);
wherein the pen body (40) comprises an outer housing (41) and a control assembly (43) disposed inside the outer housing (41); and the control assembly (43) is configured to control an operating mode of the stylus (30), wherein the operating mode comprises a writing mode and an erasing mode;
the first electrode (44) is disposed at a tip end of the pen body (40), and is configured to transmit a first downlink signal to a touch screen (20) in the writing mode, wherein the first downlink signal is configured to indicate a writing position of the stylus (30) relative to the touch screen (20);
the second electrode (57) is disposed at a tail end of the pen body (40), and is configured to transmit a second downlink signal to the touch screen (20) in the erasing mode, wherein the second downlink signal is configured to indicate an erasing position of the stylus (30) relative to the touch screen (20);
the third electrode (63) is disposed on the pen body (40), and is located between the first electrode (44) and the second electrode (57); and
the third electrode (63) is configured to:
cooperate with the first electrode (44) to enable detection of a tilt angle of the pen body (40) in the writing mode; and
cooperate with the second electrode (57) to enable detection of a tilt angle of the pen body (40) in the erasing mode and perform an erasing adjustment.

2. The stylus (30) of claim 1, wherein the third electrode (63) comprises an annular electrode sheet; the annular electrode sheet is provided at the pen body (40) and located inside the outer housing (41); and the third electrode (63) is closer to the second electrode (57) relative to the first electrode (44).

3. The stylus (30) of claim 1, further comprising:
a tip (42);
a cap assembly (50);
a first magnetic element (61); and
a second magnetic element (62);
wherein the tip (42) is disposed at a first end of the outer housing (41);
the cap assembly (50) is disposed at a second end of the outer housing (41); and the cap assembly (50) is movably connected to the pen body (40), and is switchable between at least two mode control positions relative to the pen body (40);
the first magnetic element (61) is disposed at the cap assembly (50);
the second magnetic element (62) is disposed at the pen body (40);
one of the first magnetic element (61) and the second magnetic element (62) is electrically connected to the control assembly (43), and is configured to sense a position of the other of the first magnetic element (61) and the second magnetic element (62) to send a position sensing signal to the control assembly (43); and
the control assembly (43) is configured to control the operating mode of the stylus (30) based on the position sensing signal.

4. The stylus (30) of claim 3, wherein the pen body (40) further comprises an inner housing (49) connected to the outer housing (41);
the cap assembly (50) comprises a press component (52) and a press cap (51); and the press cap (51) is disposed at an end of the press component (52) away from the inner housing (49);
the second electrode (57) is elastic, and is disposed at the cap assembly (50) and between the press cap (51) and the press component (52);
the press cap (51) is configured to drive the first magnetic element (61) to switch between a first erasing control position and a second erasing control position relative to the press component (52); and
in response to a case that the first magnetic element (61) is in the first erasing control position, the erasing mode of the stylus (30) is in an on state; and in response to case that the first magnetic element (61) is in the second erasing control position, the erasing mode of the stylus (30) is in an off state.

5. The stylus (30) of claim 3, wherein the pen body (40) further comprises an inner housing (49) connected to the outer housing (41);
the at least two mode control positions comprise a first mode control position and a second mode control position;
the cap assembly (50) comprises a press component (52) and a driving element (53), and the driving element (53) is disposed between the press component (52) and the inner housing (49); and the cap assembly (50) is switchable between the first mode control position and the second mode control position relative to the pen body (40);
in response to a case that the cap assembly (50) is switched from the first mode control position to the second mode control position, the driving element (53) is configured to be compressed and maintained in a compressed state; and in response to a case that the driving element (53) is released from the compressed state, a generated elastic force is configured to drive the cap assembly (50) to switch from the second mode control position back to the first mode control position; and
the writing mode comprises a first operating sub-mode and a second operating sub-mode; in response to a case that the cap assembly (50) is in the first mode control position, the stylus (30) is in the first operating sub-mode; and in response to a case that the cap assembly (50) is in the second mode control position, the stylus (30) is in the second operating sub-mode.

6. The stylus (30) of claim 4, wherein the at least two mode control positions comprise a first mode control position and a second mode control position;
the cap assembly (50) further comprises a driving element (53), and the driving element (53) is disposed between the press component (52) and the inner housing (49); and the cap assembly (50) is switchable between the first mode control position and the second mode control position relative to the pen body (40);
in response to a case that the cap assembly (50) is switched from the first mode control position to the second mode control position, the driving element (53) is configured to be compressed and maintained in a compressed state; and in response to a case that the driving element (53) is released from the compressed state, a generated elastic force is configured to drive the cap assembly (50) to switch from the second mode control position back to the first mode control position; and
the writing mode comprises a first operating sub-mode and a second operating sub-mode; in response to a case that the cap assembly (50) is in the first mode control position, the stylus (30) is in the first operating sub-mode; and in response to a case that the cap assembly (50) is in the second mode control position, the stylus (30) is in the second operating sub-mode.

7. The stylus (30) of claim 5, wherein the first operating sub-mode is a note-taking mode, and the second operating sub-mode is a highlighting mode; or
the first operating sub-mode is the highlighting mode, and the second operating sub-mode is the note-taking mode.

8. The stylus (30) of claim 6, wherein an elastic modulus of the second electrode (57) is less than that of the driving element (53).

9. The stylus (30) of claim 5, wherein the cap assembly (50) further comprises a locking component (58) connected to the inner housing (49); and the locking component (58) is configured to limit the press component (52) in response to a case that the cap assembly (50) is in the first mode control position or the second mode control position, thereby maintaining the cap assembly (50) in the first mode control position or the second mode control position;
the press component (52) is provided with a guide groove (524); the guide groove (524) comprises a first groove section (5241) and a second groove section (5242) in communication with the first groove section (5241); the first groove section (5241) is configured to extend along a lengthwise direction of the pen body (40), and the second groove section (5242) is in communication with an end of the first groove section (5241) away from the inner housing (49); and the second groove section (5242) is provided with a hook segment (5243); and
the locking component (58) has a limiting end (581) and a fixing end (582); and the limiting end (581) is located within the guide groove (524), and the fixing end (582) is connected to the inner housing (49).

10. The stylus (30) of claim 9, wherein the second groove section (5242) further comprises a first guide segment (524a) and a second guide segment (524b); the first guide segment (524a) and the second guide segment (524b) are respectively connected between the first groove section (5241) and the hook segment (5243), such that the second groove section (5242) forms a closed annular groove.

11. The stylus (30) of claim 9, wherein the locking component (58) further comprises a connecting rod (583) connected between the limiting end (581) and the fixing end (582);
the inner housing (49) comprises an annular sidewall structure (4911) and a bottom wall (4912) connected to an end of the annular sidewall structure (4911);
a first end of the driving element (53) is located within a space enclosed by the annular sidewall structure (4911) and the bottom wall (4912), and is configured to abut against the bottom wall (4912); and a second end of the driving element (53) is configured to abut against the press component (52);
the fixing end (582) is engaged with a side of the bottom wall (4912) away from the driving element (53);
the inner housing (49) is provided with a notch (494); and
the connecting rod (583) is configured to extend out of the notch (494) to enable the limiting end (581) to slide within the guide groove (524).

12. The stylus (30) of claim 6, wherein the press component (52) comprises a first cylindrical section (521) and a second cylindrical section (522) connected to an end of the first cylindrical section (521) away from the inner housing (49);
an outer diameter of the first cylindrical section (521) is greater than an outer diameter of the second cylindrical section (522) to form a step structure (523);
the press cap (51) is sleeved on the second cylindrical section (522); and
the second electrode (57) is connected between the press cap (51) and the driving element (53), or connected between the press cap (51) and the press component (52).

13. A method of operating a stylus (30), the stylus (30) being in communication connection with a touch screen (20), the stylus (30) comprising a first electrode (44) at a first end of the stylus (30), a second electrode (57) at a second end of the stylus (30), and a third electrode (63) disposed between the first electrode (44) and the second electrode (57), and the method comprising:
determining a current operating mode of the stylus (30);
in response to case that the current operating mode is determined to be a writing mode, controlling the first electrode (44) and the third electrode (63) to respectively transmit a first downlink signal and a second downlink signal to the touch screen (20) to indicate a writing position and a writing tilt state of the stylus (30) relative to the touch screen (20); and
in response to a case that the current operating mode is determined to be an erasing mode, controlling the second electrode (57) to transmit a third downlink signal to the touch screen (20) to indicate an erasing position of the stylus (30) relative to the touch screen (20), and controlling the third electrode (63) to transmit a fourth downlink signal to the touch screen (20) to indicate an erasing tilt state of the stylus (30).

14. The method of claim 13, wherein the fourth downlink signal is further configured to trigger an erasing adjustment in the erasing mode;
the erasing adjustment comprises adjustment of an erasing parameter or adjustment of erasing information; and the erasing parameter is selected from the group consisting of an eraser head width, an eraser head shape, an erasing transparency, and a combination thereof.

15. The method of claim 13, wherein the stylus (30) further comprises a pen body (40), a cap assembly (50), a first magnetic element (61) disposed at the cap assembly (50), and a second magnetic element (62) disposed at the pen body (40); and the cap assembly (50) is movably connected to the pen body (40); and
the method further comprises:
detecting a position of the first magnetic element (61) relative to the second magnetic element (62);
generating a position sensing signal corresponding to the position; and
controlling the erasing mode of the stylus (30) to be in an on or off state according to the position sensing signal.
